(19) Europäisches Patentamt
European Patent Office
Office européen des brevets

(11) **EP 3 002 349 B1**

(12) **EUROPEAN PATENT SPECIFICATION**

(45) Date of publication and mention
of the grant of the patent:
**28.06.2017 Bulletin 2017/26**

(51) Int Cl.:
**C25C 1/08** (2006.01)     **C25C 7/04** (2006.01)
**C08J 5/22** (2006.01)

(21) Application number: **15195750.3**

(22) Date of filing: **15.03.2013**

(54) **MEMBRANE PROCESS OF ELECTRO-DEPOSITING AND REFINING METAL CHLORIDE AND PREPARATION OF CATION SELECTIVE MEMBRANE**

MEMBRANVERFAHREN FÜR DIE ELEKTROABSCHEIDUNG UND -VEREDELUNG VON METALLCHLORID UND HERSTELLUNG EINER KATIONENSELEKTIVEN MEMBRAN

PROCÉDÉ À MEMBRANE PERMETTANT DE DÉPOSER ET DE RAFFINER PAR ÉLECTROLYSE UN CHLORURE MÉTALLIQUE ET PRÉPARATION D'UNE MEMBRANE SÉLECTIVE À CATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2012 CN 201210363951**

(43) Date of publication of application:
**06.04.2016 Bulletin 2016/14**

(62) Document number(s) of the earlier application(s) in accordance with Art. 76 EPC:
**13834356.1 / 2 743 379**

(73) Proprietor: **Lanzhou Jiaotong University Lanzhou, Gansu 730070 (CN)**

(72) Inventors:
• **WANG, Sanfan**
  **730070 Lanzhou (CN)**
• **ZHOU, Jian**
  **730070 Lanzhou (CN)**
• **WANG, Ting**
  **730070 Lanzhou (CN)**
• **ZHAO, Hongjing**
  **730070 Lanzhou (CN)**
• **ZHANG, Xuemin**
  **730070 Lanzhou (CN)**
• **LI, Lezhuo**
  **730070 Lanzhou (CN)**

(74) Representative: **Hanna Moore + Curley Garryard House 25/26 Earlsfort Terrace Dublin 2, D02 PX51 (IE)**

(56) References cited:
**WO-A1-93/06261       CN-A- 1 548 585
CN-A- 102 108 519     CN-Y- 2 721 628
GB-A- 1 460 400       GB-A- 1 513 553
US-A- 4 104 132**

## Description

### Technical field

The invention discloses a production method of electro-depositing and refining metal chloride by a membrane process, which is a new technology of organically combining electrochemistry and diaphragm separation, belonging to the field of metal smelting.

### Background technology

Conventional metal refining industrial scale method is an electrodeposition process, that is, using high-concentration and high-purity metal electrolyte, reduces metal ion in the electrolyte into metal through an electrochemical cathode reduction way, thus obtaining high-purity metal, and the process is available for refining of copper, nickel, cobalt and the like. Chloride electrolyte is the most common metal electrolyte in electrodeposition production process, the electrolyte is prepared by metal chloride and pH value is regulated by hydrochloric acid; high-concentration chloride ion in the electrolyte is anodized into chlorine in electrodeposition process, and the generation of chlorine will change the nature of the electrolyte and affect the quality of electric cobalt, and simultaneously, the spilled chlorine will result in serious pollution to the internal environment of the production workshop; some operators even shall wear gas mask to work. A great amount of generated chlorine must be collected and absorbed by alkali, so as to eliminate the influence of the chlorine on external environment, but alkali absorption will result in further improvement of production cost. At present, domestic metal chloride electrodeposition adopts the process, thus being affected by previous shortcomings. To avoid chlorine pollution in chloride electrolysis process, sealed non-diaphragm electrolytic cell technology is generally adopted at abroad, so as to prevent a problem that chlorine pollutes working environment, but problems of inconvenient operation of detaching cathode, and the sealing surface un-tight or easy to damage due to repeated detaching are accompanied.

Ion-exchange diaphragm electrolysis technology is a comprehensive function property technology combining diaphragm separation and electrolysis. Using cation exchange diaphragm or anion exchange diaphragm, the electrolytic cell is divided into a plurality of chambers (for example: cathode chamber, anode chamber and middle chamber). Under electric field force and ion-exchange diaphragm selective transmission property, positive and negative ions in electrolyte solutions of various chambers are selectively permitted or stopped, thus achieving purposes of material concentration, desalination, purification and electrochemical synthesis. Efficient, high-quality and pollution-free properties of the ion-exchange electrolysis technology have drawn high attention of people; the technology has been widely applied to production of chlor-alkali, desalination of seawater and bitter brackish, preparation of industrial water and ultra-pure water, and other aspects, but is rarely adopted in metal smelting industry.

At present, the problems of commercial cation exchange diaphragm is not high in anion blocking rate, generally higher than 90%, poor in size stability and relatively poor in mechanical strength are common. Filling the nano inorganic oxide to organic polymer (such as polyvinylidene fluoride, styrene and other monomers) is a research hot spot at home and abroad, and zirconium dioxide, silicon dioxide, titanium dioxide, aluminium oxide and other nano materials are common nano inorganic oxides. The nano silicon dioxide, added in organic polymer, although can improve the selective transmission of ion exchange diaphragm, will reduce the conductivity of the ion exchange diaphragm, and is relatively high in diaphragm resistance and high in energy consumption. The process of preparing the nano zirconium dioxide and nano titanium dioxide is relatively complex and high in preparation cost, thus being unsuitable for large-scale commercial application.

The present state of the art is represented by CN 102108519 A, CN 2721628 Y, CN 1548585 A, WO 93/06261 A1, GB 1513553 A, US 4104132 A, GB 1460400 A.

### Summary of invention

The present invention provides a production method of electro-depositing and refining metal chloride by a membrane process and preparation method for cation selective membrane or diaphragm used therein, in accordance with claims which follow.

The invention aims at overcoming the shortcomings of the conventional metal chloride electrodeposition refining process which is serious in environmental pollution due to generation of chlorine, high in treatment cost, poor in metal product quality and the like, thus providing a production method of electro-depositing and refining metal chloride by a membrane process for avoiding generation of chlorine from production source and for solving chlorine environmental pollution thoroughly, as well as a preparation method of cation selective diaphragm adopted by the method.

The specific technical solution is as follows: A production method of electro-depositing and refining metal chloride by a membrane process, using a cation selective diaphragm and an anion selective diaphragm to divide an

2

electrolytic cell into an anode chamber, a middle partition chamber and a cathode chamber in sequence, wherein an anode and a cathode, as well as anode liquor and cathode liquor are respectively arranged in the anode chamber and the cathode chamber correspondingly; the anode liquor is a diluted sulfuric acid solution, the cathode liquor is an acid metal chloride solution, and a diluted hydrochloric acid solution is contained in the middle partition chamber; reducing the metal cation at the cathode, and separating out reduced metal cation in the form of a single simple substance while introducing direct-current power for electrolysis; and simultaneously carrying out water oxidation reaction at the anode to acquire oxygen gas, and 5%-10% of hydrochloric acid solution can be acquired in the middle partition chamber.

Said anode is a lead-series alloy or titanium-base semiconductor coating electrode.

The current density of the anode is 100A/m$^2$~500 A/m$^2$.

The acid metal chloride solution may be $NiCl_2$, $CuCl_2$, $CoCl_2$, $ZnCl_2$ solution, with pH value ranging from 2 to 5.

The cathode is a nickel sheet, a copper sheet, a cobalt sheet or a zinc sheet corresponding to metal cation in the cathode liquor.

The concentration of the diluted hydrochloric acid solution in the middle partition chamber ranges from 0.5% to 1%.

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group (as hereinafter defined), adding nano manganese dioxide while oscillating; after the manganese dioxide is completely dissolved, adding the mixture of high-pressure polyethylene and glycidyl acrylate or glycidyl methacrylate , uniformly mixing and then adding an initiator (as hereinafter defined); uniformly mixing the solution under ultrasonic environment, standing by for 1-2 days, and preparing film casting liquid after defoaming and curing, wherein various materials involved in the step respectively account for parts as hereinafter defined;

b. at normal temperature, casting the film casting liquid on a glass plate, heating and curing for 8 hours at 120-150°C in a thermostat, and then cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in de-ionized water for 24 hours, and removing un-reacted monomer.

In the step a of step I, the active group-containing organic solvent is a mixing solution of 2-acrylamide-2-methyl propanesulfonic acid and dimethyl formamide at weight ratio of (8-9): (1-2), or a mixing solution of 2-acrylamide-2-methyl propanesulfonic acid and dimethyl acetamide at weight ratio of (8-9): (1-2), or a mixing solution of sodium allysulfonate and dimethyl formamide at weight ratio of (8-9): (1-2), preferably a mixing solution of 2-acrylamide-2-methyl propanesulfonic acid and dimethyl formamide at weight ratio of 8: 1.

The initiator is mixture of dilauroyl peroxide and di-tert-butyl peroxide at weight ratio of 8: 2. Various materials involved in the step respectively account for 8 parts of polyvinylidene fluoride, 2 parts of styrene, 0.1 part of manganese dioxide, 0.9 parts of high-pressure polyethylene, 2.5 parts of glycidyl acrylate or glycidyl methacrylate , 85 parts of active group-containing organic solvent and 1.5 parts of initiator by weight.

In the step b of the step II, the monomer containing phenol is either 2-allylphenol or 4-vinylphenol or both of them, which accounts for 5-20% of the mass percentage of the solution A, preferably the 2-allylphenol, which accounts for 15% of the mass percentage of the solution A.

In the step b of the step II, the cross-linking agent is either divinyl benzene or diisocyanate, which accounts for 0.5-1% of the mass percentage of the solution A, preferably 0.8%.

The granularity of the nano manganese dioxide is 10-50nm.

The cation selective diaphragm is the cation selective diaphragm proposed in claim 1; the side of cation selective diaphragm with phenolic group is the middle partition chamber, which is contacted with the diluted hydrochloric acid solution; and the other side of cation selective diaphragm without phenolic group is the anode chamber, which is contacted with the diluted sulfuric acid solution.

Specifically speaking, under traction of DC electric field force, metal cation in the metal chloride solution in cathode chamber, attracted by cathode, can do directed migration towards the cathode, participate in electrode reduction reaction on the cathode and then be separated in form of metal simple substance; Cl-moves out of the cathode chamber, penetrates the anion selective diaphragm and enters into the middle partition chamber, and is then fixed in the middle partition chamber through the blockage of the cation selective diaphragm; the diluted sulfuric acid solution contained in the anode chamber, because the oxidation potential of $H_2O$ on anode is lower than that of $SO_4^{2-}$ on anode, is oxidized and participates in electrode oxidation, to generate $H^+$ and $O_2$; $H^+$, under traction of DC electric field force, moves out of the anode chamber, penetrates cation selective diaphragm and enters into the middle partition chamber, and then is fixed in the middle partition chamber due to the blockage of the anion selective diaphragm, thus forming HCl; electrochemical reaction formulas refer to (1), (2) and (3):

Cathode compartment reduction reaction:

$$M^{n+}+ne\rightarrow M\downarrow \qquad (1)$$

Anode compartment reduction reaction: $\qquad H_2O\text{-}2e\longrightarrow 2H^+ +\frac{1}{2}O_2\uparrow \qquad\qquad (2)$

Middle compartment reaction:

$$H^+ + Cl^- \rightarrow HCl \qquad (3)$$

Cation selective diaphragm and preparation thereof are key contents of the invention, because the cation selective diaphragm, which is selected by the invention and is contacted with the diluted hydrochloric acid solution by one side with phenolic group, has high $Cl^-$ blocking function up to 99.9%; one side face of the cation selective diaphragm is grated and polymerized with monomer with phenolic group, to enhance hydrophilicity, and to ionize hydrogen ion, be weak acidity; a layer of negative charge is attached on the surface of the diaphragm, to form a negative electric field, thus effectively preventing chlorine ion in the metal chloride solution in cathode chamber from migrating to anode, and participating in oxidation reaction to form chlorine.

The invention, by adding nano inorganic matter and through plasma irradiation graft polymerization technology, prepares the cation selective diaphragm which is high in anion blockage rate, high in exchange capacity and good in mechanical strength.

Nano manganese dioxide is added to base diaphragm material, to enhance ion exchange capacity; due to electrostatic attraction, the relative ion concentration of the base diaphragm surface is improved, reflecting as increment of immobile charge density of the base diaphragm surface, and correspondingly, the ion migration amount is increased; and meanwhile, the conductivity and the mechanical performance of the base diaphragm are improved, and the hydrophilicity of the base diaphragm is enhanced.

Organic monomer is activated and graft-polymerized on the surface of the base diaphragm through plasma; corona discharge has the advantages that corona discharge penetrating power is not strong and penetrating thickness is low, so that the mechanical damage of the base diaphragm is avoided and the performance of the base diaphragm main body is not affected; the corona discharge just acts on the surface of the base diaphragm, and is simple and easy to implement, and rapid in treatment speed. The corona discharge process may generate high-energy particles which are quite strong in energy to several even dozens of electron volts generally, for example electron energy is 0-20eV, metastable state particle is 0-20eV, and UV-light/visible light is 3-40eV. The key energies of common chemical bonds in the polymer are as follows: C-H is 4.3eV, C-N is 2.9eV, C-F is 4.4eV, C=O is 8.0eV, C-C is 3.4eV, and C=C is 6.1eV. Therefore, the energies of most particles generated by corona discharge are higher than chemical bond energy of the polymer. The high-energy particles, under high-voltage electric field, are accelerated to directly bump into base diaphragm surface, so that C-H, C=C, C=O and other chemical bonds of the macromolecular organic matter of the base diaphragm are broken or opened; meanwhile, partial energies of the high-energy particles are accepted as excited state molecule which has activity; the excited state molecule, which is instable, is decomposed into free radial or ion which can be polymerized with organic monomer and will deposit on the diaphragm surface to form a coating with designability. Through a plasma-irradiated base diaphragm, the surface of the base diaphragm is activated, which is favorable for contact with the organic monomer of the phenolic group, so that strong hydrophilic phenolic group which is difficult to graft can be smoothly grafted and polymerized onto hydrophobic polyvinylidene fluoride and styrene base diaphragm; that is through polymerization, 2-allylphenol and 4-vinylphenol are grafted to one side of the polyvinylidene fluoride and styrene base diaphragm, thus enhancing the hydrophilicity of the base diaphragm; meanwhile, hydrogen ion, which is ionized from the side of the base diaphragm, has weak acidity, and a negative electric field is formed on the surface of the base diaphragm through a layer of negative charge thereon; in addition, the base diaphragm has an immobile group, namely sulfonic cation exchange diaphragm, on the basis of double-electric layer theory of the cation selective diaphragm and the principle that like ions repel, the anion blocking rate is greatly improved, specifically ion with negative charge is prevented from penetrating.

Table 1 Performance parameters of various cation selective diaphragms

| Cation selective diaphragm | Ion exchange capacity (mmol/g) | Moisture content (%) | diaphragm potential (mV) | Anion blocking rate (%) | |
|---|---|---|---|---|---|
| diaphragm A | 2.1 | 33 | 20 | $Cl^-$ | 99.9 |
| | | | | $SO_4^{2-}$ | 99.8 |
| | | | | $CO_3^{2-}$ | 99.6 |
| diaphragm B | 1.76 | 26 | 15 | $Cl^-$ | 97.4 |
| | | | | $SO_4^{2-}$ | 97.1 |
| | | | | $CO_3^{2-}$ | 97.2 |
| diaphragm C | 1.82 | 26 | 18 | $Cl^-$ | 98.9 |
| | | | | $SO_4^{2-}$ | 98.5 |
| | | | | $CO_3^{2-}$ | 98.6 |

Diaphragm A is cation selective diaphragm of the invention, diaphragm B is sulfonic acid group-containing base diaphragm prepared by manganese dioxide/polyvinylidene fluoride mixture, and diaphragm C is perfluorinated sulfonic acid diaphragm.

Obtained from Table 1, various performance parameters of the diaphragm A are more excellent than that of the diaphragm B and the diaphragm C. Specifically, anion non-transmission rate and chlorine ion blocking rate is up to 99.9%, because a negative electric field is formed at one side of the surface of the diaphragm A due to a layer of negative charge thereon, so as to prevent the chlorine ion from penetrating; the ion exchange capacity and the moisture content of the diaphragm A are more excellent than that of the diaphragm B and the diaphragm C, because the nano manganese dioxide added can increase hydrophilic group in the diaphragm A, thus enhancing the moisture content of the diaphragm A and improving the density of sulfonic acid group in the diaphragm A; and the number of exchangeable counter ions is increased, and ion-exchange capacity is improved.

Method for determination of ion exchange capacity and moisture content: ion exchange capacity is a chemical performance index reflecting concentration of active group in the ion exchange diaphragm and counter ion exchange capacity, which is represented by milligram equivalent number (mmol/g) of active group in each gram of dry film. The cation selective diaphragm is soaked in 1mol/L HCl solution, so as to convert the diaphragm into H type; the diaphragm is completely flushed by deionized water, and HCl in the diaphragm is discharged until the diaphragm is neutral; the water on the diaphragm surface is absorbed by filter paper, the wet weight $G_{wet}$ of the diaphragm is weighed, and the diaphragm is soaked in 2mol/L NaCl solution for 6 hours; the diaphragm is completely washed by deionized water, leachate and washing water are collected, $H^+$ in the collection liquid is dropped by 0.1mol/L NaOH, and NaOH dosage V is recorded; the diaphragm is wiped by filter paper, and is dried in a thermostat at 65°C until to constant weight $G_{dry}$.

$$\text{Calculation formula of ion exchange capacity: } A_{H+} = a/G_{dry}, a = 0.1*V.$$

$$\text{Calculation formula of moisture content: } W = (G_{wet} - G_{dry})/G_{dry}*100.$$

$A_{H+}$- ion exchange capacity (mmol/g dry film), a-$H^+$ content (mol) in collection liquid, V-NaOH dosage (L), W-moisture content (%), $G_{wet}$-wet weight (g), $G_{dry}$-dry weight (g).

Determination method of diaphragm potential:

A diaphragm to be detected is arranged between two chambers which having same kind of electrolyte solutions (such as KCl solution) but differing in concentration, using saturated calomel electrode as a reference electrode; the electrolyte solution is connected with the calomel electrode through a salt bridge, thus forming a complex primary battery, wherein a DT-830 digital universal meter is used for measuring the potential E Measure of the primary battery, and Eo represents a theoretical potential different of same kind of electrolyte solutions differing in concentration. The diaphragm potential calculation formula is: E Diaphragm =E Measure - Eo.

The invention modifies the electrolytic cell in the conventional electrolysis process into diaphragm electrolysis process and an integrated electrolytic cell structure. Two selective diaphragms are adopted to divide the electrolytic cell into three chambers, thus forming an anode chamber, a cathode chamber and a middle chamber which are injected with different electrolytes or receiving liquid. The cathode chamber is still injected with existing chloride-containing electrolyte, so that component, proportion concentration and circulating way are not changed, and the quality of normal chloride refining electrodeposition metal is guaranteed. The anode chamber is injected with $H_2SO_4$ diluted electrolyte, free from chlorine, and the middle partition chamber is injected with HCl diluted receiving liquid, to collect chlorine ions which migrate in cathode chamber and hydrogen ions migrating in anode chamber, so as to maintain normal electrolysis process and to prevent the generation of chlorine, thus solving a problem of generating chlorine in the conventional metal chloride electrodeposition process thoroughly; the chlorine ion can be converted into high-concentration hydrochloric acid for recycle, so as to improve economic value; and the obtained metal product is good in quality, so that the method is a method consistent with environmental protection development trend of green metallurgy.

## Description on attached figures

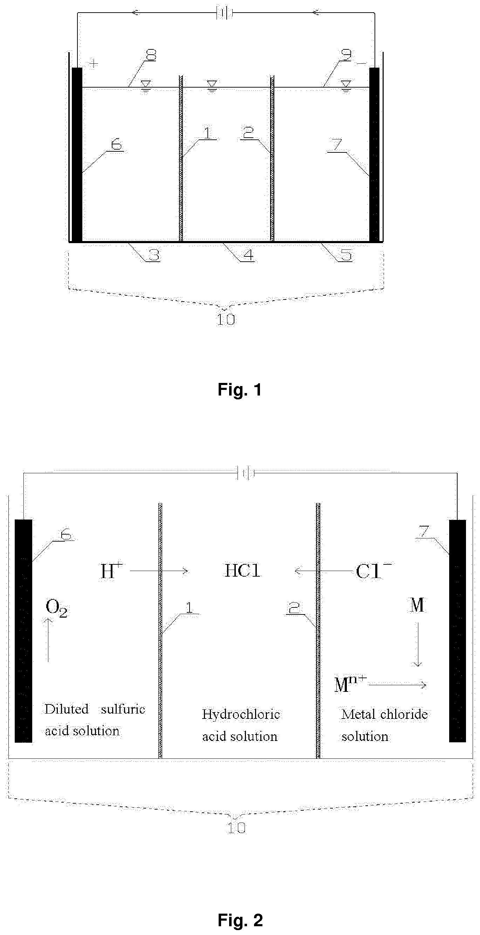

Figure 1: schematic diagram of the production method of electro-depositing and refining metal chloride by a membrane process;

Figure 2: schematic diagram of electrochemical reaction of the production method of electro-depositing and refining metal chloride by a membrane process;

Wherein, 1-cation selective diaphragm, 2-anion selective diaphragm, 3-anode chamber, 4-middle partition chamber, 5-cathode chamber, 6-anode, 7-cathode, 8-anode liquid, 9-cathode liquid, 10-electrolytic cell.

## Specific implementation ways

A production method of electro-depositing and refining metal chloride by a membrane process, using a cation selective diaphragm and an anion selective diaphragm to divide an electrolytic cell into an anode chamber, a middle partition chamber and a cathode chamber in sequence, wherein an anode and a cathode, as well as anode liquor and cathode liquor are respectively arranged in the anode chamber and the cathode chamber; the anode liquor is a diluted sulfuric acid solution, the cathode liquor is an acid metal chloride solution, and a diluted hydrochloric acid solution is contained in the middle partition chamber; reducing the metal cation at the cathode, and separating out reduced metal cation in the form of a single simple substance while introducing direct-current power for electrolysis; and simultaneously carrying out water oxidation reaction at the anode to acquire oxygen gas, and 5%-10% of hydrochloric acid solution can be acquired in the middle partition chamber.

Said anode is a lead-series alloy or titanium-base semiconductor coating electrode.

The current density of the anode is 100A/m$^2$~500 A/m$^2$.

The acid metal chloride solution can be $NiCl_2$, $CuCl_2$, $CoCl_2$, $ZnCl_2$ solution, with pH value ranging from 2 to 5.

The cathode is a nickel sheet, a copper sheet, a cobalt sheet or a zinc sheet corresponding to metal cation in the cathode liquor.

The concentration of the diluted hydrochloric acid solution in the middle partition chamber ranges from 0.5% to 1%.

The electrolyte solution is controlled at 0-70 °C during electrolysis process.

The electrolysis can be in the form of single-electrolytic bath electrodeposition or multi-electrolytic bath serial electrodeposition

Embodiment 1 (not according to the invention)

High-concentration $NiCl_2$ solution is obtained from nickel-containing waste residue, which is taken as electrodeposition raw material liquid, through acid leaching and ion exchange enrichment, and the $NiCl_2$ solution is 40g/L in concentration and pH value is 4.5. The electrolysis way is single-electrolytic cell electrodeposition, with an inert electrode titanium-coated ruthenium net taken as anode 6 and pure metal nickel plate selected as cathode 7; the cation selective diaphragm 1 is Nafion117, and the anion selective diaphragm 2 is JAM-II homogeneous-phase anion exchange diaphragm; 0.5% diluted sulfuric acid water solution is used as anode liquid 8, 40g/L $NiCl_2$ solution is taken as cathode liquid 9, and 0.5% diluted hydrochloric acid water solution is contained in the middle partition chamber 4; direct current is conducted for electrolysis, anodic current density is 100A/$m^2$, and metal nickel ion is reduced on the cathode 7 and is separated in form of simple substance which is detected to be 99.8% in purity; and meanwhile, 7% hydrochloric acid water solution is obtained from the middle partition chamber 4, and the concentration of the chlorine ion in the anode liquid 8 is nearly zero.

Embodiment 2 (not according to the invention)

Electrolyte is prepared from solid cobalt chloride, which is purified and cleaned into electrodeposition raw material liquid, $CoCl_2$ electrolyte is 50g/L in concentration and pH value is 3.0. The electrolysis way is multi-electrolytic cell electrodeposition, with an aluminum-silver alloy plate taken as anode 6 and pure metal nickel plate selected as cathode 7; the cation selective diaphragm 1 is Nafion234, and the anion selective diaphragm 2 is JAM-II homogeneous-phase anion exchange diaphragm; 0.8% diluted sulfuric acid water solution is used as anode liquid 8, 50g/L $CoCl_2$ solution is taken as cathode liquid 9, and 0.5% diluted hydrochloric acid water solution is contained in the middle partition chamber 4; direct current is conducted for electrolysis, anodic current density is 200A/$m^2$, and metal cobalt ion is reduced on the cathode 7 and is separated in form of simple substance which is detected to be 99.8% in purity; and meanwhile, 8% hydrochloric acid water solution is obtained from the middle partition chamber 4, and the concentration of the chlorine ion in the anode liquid 8 is nearly zero.

Embodiment 3

High-concentration $NiCl_2$ solution is obtained from nickel-containing waste residue, which is taken as electrodeposition raw material liquid, through acid leaching and ion exchange enrichment, and the $NiCl_2$ solution is 40g/L in concentration and pH value is 4.5. The electrolysis way is single-electrolytic cell electrodeposition, with an inert electrode titanium-coated ruthenium net taken as anode 6 and pure metal nickel plate selected as cathode 7; the cation selective diaphragm 1 is the cation selective diaphragm proposed as the invention, and the anion selective diaphragm 2 is JAM-II homogeneous-phase anion exchange diaphragm; one side of the cation selective diaphragm 1 with the phenolic group is the middle partition chamber which is in contact with the diluted hydrochloric acid solution, and the other side free from the phenolic group is the anode chamber which is in contact with the diluted sulfuric acid solution; 0.5% diluted sulfuric acid water solution is used as anode liquid 8, 40g/L $NiCl_2$ solution is taken as cathode liquid 9, and 0.6% diluted hydrochloric acid water solution is contained in the middle partition chamber 4; direct current is conducted for electrolysis, anodic current density is 100A/$m^2$, and metal nickel ion is reduced on the cathode 7 and is separated in form of simple substance which is detected to be 99.9% in purity; and meanwhile, 7% hydrochloric acid water solution is obtained from the middle partition chamber 4, and the concentration of the chlorine ion in the anode liquid 8 is nearly zero. The cation selective diaphragm 1 is the cation selective diaphragm proposed as the invention, by which Cl$^-$ in the middle partition chamber 4, instead of migrating towards anode under DC electric field traction force, is fixed in the middle partition chamber 4, thus solving a problem of generating chlorine in the conventional metal chloride electrodeposition process thoroughly and avoiding environmental pollution. H$^+$ in the anode liquid 8, under DC electric field traction force, migrates out of anode chamber 3, penetrates the cation selective diaphragm and enters into the middle partition chamber 4, thus forming HCL with the Cl$^-$ in the middle partition chamber 4, and the HCl can be recycled. The cation exchange diaphragm of the invention is high in ion exchange capacity and good in hydrophilicity, and selective diaphragm is good in selective transmission; specifically, for the chlorine ion, the cation exchange diaphragm has quite high blockage rate and long service life.

Embodiment 4

Electrolyte is prepared from solid cobalt chloride, which is purified and cleaned into electrodeposition raw material liquid, $CoCl_2$ electrolyte is 50g/L in concentration and pH value is 3.0. The electrolysis way is multi-electrolytic cell electrodeposition, with an aluminum-silver alloy plate taken as anode 6 and pure metal nickel plate selected as cathode 7; the cation selective diaphragm 1 is the cation selective diaphragm proposed as the invention, and the anion selective diaphragm 2 is JAM-II homogeneous-phase anion exchange diaphragm; one side of the cation selective diaphragm 1 with the phenolic group is the middle partition chamber which is in contact with the diluted hydrochloric acid solution, and the other side free from the phenolic group is the anode chamber which is in contact with the diluted sulfuric acid solution; 0.8% diluted sulfuric acid water solution is used as anode liquid 8, 50g/L $CoCl_2$ solution is taken as cathode liquid 9, and 0.5% diluted hydrochloric acid water solution is contained in the middle partition chamber 4;

direct current is conducted for electrolysis, anodic current density is 500A/m$^2$, and metal cobalt ion is reduced on the cathode 7 and is separated in form of simple substance which is detected to be 99.9% in purity; and meanwhile, 10% hydrochloric acid water solution is obtained from the middle partition chamber 4, and the concentration of the chlorine ion in the anode liquid 8 is nearly zero. The cation selective diaphragm 1 is the cation selective diaphragm proposed as the invention, by which Cl$^-$ in the middle partition chamber 4, instead of migrating towards anode under DC electric field traction force, is fixed in the middle partition chamber 4, thus solving a problem of generating chlorine in the conventional metal chloride electrodeposition process thoroughly and avoiding environmental pollution. H$^+$ in the anode liquid 8, under DC electric field traction force, migrates out of anode chamber 3, penetrates the cation selective diaphragm and enters into the middle partition chamber 4, thus forming HCL with the Cl$^-$ in the middle partition chamber 4, and the HCl can be recycled. The cation exchange diaphragm of the invention is high in ion exchange capacity and good in hydrophilicity, and selective diaphragm is good in selective transmission; specifically, for the chlorine ion, the cation exchange diaphragm has quite high blockage rate and long service life.

Embodiment 5

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group , adding nano manganese dioxide while oscillating; after the manganese dioxide is completely dissolved, adding the mixture of high-pressure polyethylene and glycidyl acrylate or glycidyl methacrylate , uniformly mixing and adding an initiator; uniformly mixing the solution under ultrasonic environment, standing by for 1-2 days, and preparing film casting liquid after defoaming and curing, wherein various materials involved in the step respectively account for 8 parts of polyvinylidene fluoride, 2 parts of styrene, 0.1 part of manganese dioxide, 0.9 part of high-pressure polyethylene, 2.5 parts of glycidyl acrylate or glycidyl methacrylate, 85 parts of active group-containing organic solvent and 1.5 parts of initiator by weight; the active group-containing organic solvent is a mixing solution of 2-acrylamide-2-methyl propanesulfonic acid and dimethyl formamide at weight ratio of 8: 1; and the initiator is mixture of dilauroyl peroxide and di-tert-butyl peroxide at weight ratio of 8: 2;

b. at normal temperature, casting the film casting liquid on a glass plate, heating and curing for 8 hours at 120-150°C in a thermostat, and then cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft, wherein the monomer containing phenolic group is a mixture of 2-allylphenol and 4-vinylphenol at a weight ratio of 3: 2, and accounts for 15% of the mass percentage of the solution A; the cross-linking agent is divinyl benzene, which accounts for 0.8% of the mass percentage of the solution A;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in de-ionized water for 24 hours, and removing un-reacted monomer.

Embodiment 6

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group, adding nano manganese dioxide while oscillating; after the manganese dioxide is completely dissolved, adding the mixture of high-pressure polyethylene and glycidyl acrylate or glycidyl methacrylate , uniformly mixing and adding an initiator; uniformly mixing the solution under ultrasonic environment, standing by for 1-2 days, and preparing film casting liquid after defoaming and curing, wherein various materials involved in the step respectively account for 5 parts of polyvinylidene fluoride, 1.2 parts of styrene, 0.05 part of manganese dioxide, 0.6 part of high-pressure polyethylene, 3 parts of glycidyl acrylate or glycidyl methacrylate, 82 parts of active group-containing organic solvent and 0.5 part of initiator by weight; the active group-containing organic solvent is a mixing solution of 2-acrylamide-2-methyl propanesulfonic acid and dimethyl acetamide at weight ratio of 9: 1; and the initiator is mixture of dilauroyl peroxide and di-tert-butyl peroxide at weight ratio of 8: 2;

b. at normal temperature, casting the film casting liquid on a glass plate, heating and curing for 8 hours at 120-150 °C in a thermostat, and then cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft, wherein the monomer containing phenolic group is 2-allylphenol, and accounts for 5% of the mass percentage of the solution A; the cross-linking agent is diisocyanate, which accounts for 0.5% of the mass percentage of the solution A;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in deionized water for 24 hours, and removing un-reacted monomer.

Embodiment 7

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group, adding nano manganese dioxide while oscillating; after the manganese dioxide is completely dissolved, adding the mixture of high-pressure polyethylene and glycidyl acrylate or glycidyl methacrylate , uniformly mixing and adding an initiator; uniformly mixing the solution under ultrasonic environment, standing by for 1-2 days, and preparing film casting liquid after defoaming and curing, wherein various materials involved in the step respectively account for 10 parts of polyvinylidene fluoride, 2 parts of styrene, 0.5 part of manganese dioxide, 1.3 parts of high-pressure polyethylene, 2 parts of glycidyl acrylate or glycidyl methacrylate, 90 parts of active group-containing organic solvent and 2 parts of initiator by weight; the active group-containing organic solvent is a mixing solution of 2-acrylamide-2-methyl propanesulfonic acid and dimethyl acetamide at weight ratio of 4: 1; and the initiator is mixture of dilauroyl peroxide and di-tert-butyl peroxide at weight ratio of 8: 2;

b. at normal temperature, casting the film casting liquid on a glass plate, heating and curing for 8 hours at 120-150°C in a thermostat, and then cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft, wherein the monomer containing phenolic group is 4-vinylphenol, and accounts for 20% of the mass percentage of the solution A; the cross-linking agent is diisocyanate, which accounts for 1% of the mass percentage of the solution A;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in de-ionized water for 24 hours, and removing un-reacted monomer.

Embodiment 8

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group, adding nano manganese dioxide while oscillating; after the manganese dioxide is completely dissolved, adding the mixture of high-pressure polyethylene and glycidyl acrylate or glycidyl methacrylate , uniformly mixing and adding an initiator; uniformly mixing the solution under ultrasonic environment, standing by for 1-2 days, and preparing film casting liquid after defoaming and curing, wherein various materials involved in the step respectively account for 6 parts of polyvinylidene fluoride, 1.5 parts of styrene, 0.08 part of manganese dioxide, 1 part of high-pressure polyethylene, 2.5 parts of glycidyl acrylate or glycidyl methacrylate, 84 parts of active group-containing organic solvent and 0.9 part of initiator by weight; the active group-containing organic solvent is a mixing solution of 2-acrylamide-2-methyl propanesulfonic acid and dimethyl acetamide at weight ratio of 9: 1; and the initiator is mixture of dilauroyl peroxide and di-tert-butyl peroxide at weight ratio of 8: 2;
b. at normal temperature, casting the film casting liquid on a glass plate, heating and curing for 8 hours at 120-150°C in a thermostat, and then cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft, wherein the monomer containing phenolic group is 2-allylphenol, and accounts for 12% of the mass percentage of the solution A; the cross-linking agent is diisocyanate, which accounts for 0.7% of the mass percentage of the solution A;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in de-ionized water for 24 hours, and removing un-reacted monomer.

Embodiment 9

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group, adding nano manganese dioxide while oscillating; after the manganese dioxide is completely dissolved, adding the mixture of high-pressure polyethylene and glycidyl acrylate or glycidyl methacrylate , uniformly mixing and adding an initiator; uniformly mixing the solution under ultrasonic environment, standing by for 1-2 days, and preparing film casting liquid after defoaming and curing, wherein various materials involved in the step respectively account for 9 parts of polyvinylidene fluoride, 1.8 parts of styrene, 0.2 part of manganese dioxide, 1.2 parts of high-pressure polyethylene, 2.5 parts of glycidyl acrylate or glycidyl methacrylate, 88 parts of active group-containing organic solvent and 1.5 parts of initiator by weight; the active group-containing organic solvent is a mixing solution of 2-acrylamide-2-methyl propanesulfonic acid and dimethyl acetamide at weight ratio of 9: 1; and the initiator is mixture of dilauroyl peroxide and di-tert-butyl peroxide at weight ratio of 8: 2;

b. at normal temperature, casting the film casting liquid on a glass plate, heating and curing for 8 hours at 120-150°C in a thermostat, and then cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft, wherein the monomer containing phenolic group is 4-vinylphenol, and accounts for 18% of the mass percentage of the solution A; the cross-linking agent is diisocyanate, which accounts for 0.9% of the mass percentage of the solution A;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in deionized water for 24 hours, and removing un-reacted monomer.

Embodiment 10

A method for preparing a cation selective diaphragm, comprising the following two major steps:

Step I: preparing a sulfonic-containing base diaphragm by mixture of manganese dioxide/polyvinylidene fluoride:

a. adding polyvinylidene fluoride and styrene to an ultrasonic oscillator containing organic solvent having active group, adding nano manganese dioxide while oscillating; after the manganese dioxide is completely dissolved, adding the mixture of high-pressure polyethylene and glycidyl acrylate or glycidyl methacrylate , uniformly mixing and adding an initiator; uniformly mixing the solution under ultrasonic environment, standing by for 1-2 days, and preparing film casting liquid after defoaming and curing, wherein various materials involved in the step respectively account for 10 parts of polyvinylidene fluoride, 1.9 parts of styrene, 0.3 part of manganese dioxide, 1 part of high-pressure polyethylene, 2.5 parts of glycidyl acrylate or glycidyl methacrylate , 90 parts of active group-containing organic solvent and 1.8 parts of initiator by weight; the active group-containing organic solvent is a mixing solution of 2-acrylamide-2-methyl propanesulfonic acid and dimethyl acetamide at weight ratio of 4: 1; and the initiator is mixture of dilauroyl peroxide and di-tert-butyl peroxide at weight ratio of 8: 2;

b. at normal temperature, casting the film casting liquid on a glass plate, heating and curing for 8 hours at 120-150°C in a thermostat, and cooling to room temperature to obtain base diaphragm;

Step II. plasma irradiated base diaphragm grafted phenolic group:

a. implementing surface activation on the base diaphragm obtained from the step I in a plasma reactor, to enhance the surface energy and the hydrophilicity of the base diaphragm, wherein normal pressure pulsed corona discharge irradiation is 20-100s, wherein voltage is 8-12KV, and working gas is any one or any mixing gas of pure argon, pure nitrogen and pure helium;

b. mixing a monomer containing phenol and a cross-linking agent in dimethyl formamide or dimethyl acetamide to obtain a uniform solution A, and soaking the activated base diaphragm in the solution A for 30-200min for polymerization graft, wherein the monomer containing phenolic group is 4-vinylphenol, and accounts for 12% of the mass percentage of the solution A; the cross-linking agent is divinyl benzene, which accounts for 0.6% of the mass percentage of the solution A;

c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; soaking in de-ionized water for 24 hours, and removing un-reacted monomer.

## Claims

1. A method for preparing a cation selective diaphragm (1), which is **characterized by** comprising the following two major steps:

   Step I: preparing a sulfonic-containing base diaphragm by mixture of manganese dioxide/polyvinylidene fluoride:

   a. adding polyvinylidene fluoride and styrene to an ultrasonic oscillator containing organic solvent having active group, wherein the active group-containing organic solvent is a mixing solution of 2-acrylamide-2-methyl propanesulfonic acid and dimethyl formamide at weight ratio of (8-9): (1-2), or a mixing solution of 2-acrylamide-2-methyl propanesulfonic acid and dimethyl acetamide at weight ratio of (8-9): (1-2), or a mixing solution of sodium allysulfonate and dimethyl formamide at weight ratio of (8-9): (1-2), preferably a mixing solution of 2-acrylamide-2-methyl propanesulfonic acid and dimethyl formamide at weight ratio of 8: 1; adding nano manganese dioxide while oscillating;
   after the manganese dioxide is completely dissolved, adding the mixture of high-pressure polyethylene and glycidyl acrylate or glycidyl methacrylate , uniformly mixing and then adding an initiator;
   wherein the initiator is mixture of dilauroyl peroxide and di-tert-butyl peroxide at weight ratio of 8: 2; various materials involved in the step respectively account for 8 parts of polyvinylidene fluoride, 2 parts of styrene, 0.1 part of manganese dioxide, 0.9 parts of high-pressure polyethylene, 2.5 parts of glycidyl acrylate or glycidyl methacrylate, 85 parts of active group-containing organic solvent and 1.5 parts of initiator by weight; uniformly mixing the solution under ultrasonic environment, standing by for 1-2 days, and preparing film casting liquid after defoaming and curing,
   b. at normal temperature, casting the film casting liquid on a glass plate, heating and curing for 8 hours at 120-150°C in a thermostat, and then cooling to room temperature to obtain the base diaphragm;

   Step II. Plasma irradiated base diaphragm grafted phenolic group:

   a. after insulating treatment at one side of the base diaphragm obtained from the step I, implementing surface activation on the base diaphragm in a plasma reactor, to enhance the surface energy and the hydrophilicity of the base diaphragm, wherein normal pressure pulsed corona discharge irradiation is 20-100s, wherein voltage is 8-12 KV, and working gas is any one or any mixing gas of pure argon, pure nitrogen and pure helium;
   b. mixing a monomer containing phenol and a cross-linking agent in dimethyl formamide or dimethyl acetamide to obtain a uniform solution A, and soaking the activated base diaphragm in the solution A for 30-200min for polymerization graft;
   c. after polymerization graft, carrying out radical graft polymerization on the base diaphragm in the plasma reactor, wherein normal pressure pulsed corona discharge irradiation is 20-100s, wherein voltage is 8-12KV, and working gas is any one or any mixing gas of pure argon, pure nitrogen and pure helium; and

   soaking in de-ionized water for 24 hours, and removing un-reacted monomer.

2. The method according to claim 1, wherein in step b of step II, the monomer containing phenol is either 2-allylphenol or 4-vinylphenol or both of them, which accounts for 5-20% of the mass percentage of the solution A, preferably the 2-allylphenol, which accounts for 15% of the mass percentage of the solution A; and the cross-linking agent is either divinyl benzene or diisocyanate, which accounts for 0.5-1% of the mass percentage of the solution A, preferably 0.8%.

3. A production method of electro-depositing and refining metal chloride by a membrane process, using a cation selective diaphragm (1) obtainable by the method of any one of claims 1 and 2, and an anion selective diaphragm (2) to divide an electrolytic cell (10) into an anode chamber (3), a middle partition chamber (4) and a cathode chamber (5) in sequence, wherein an anode (6) and a cathode (7), as well as anode liquor (8) and cathode liquor (9) are respectively arranged in the anode chamber (3) and the cathode chamber (5); the anode liquor (8) is a diluted sulfuric acid solution, the cathode liquor (9) is an acid metal chloride solution, and a diluted hydrochloric acid solution is contained in the middle partition chamber (4); reducing the metal cation at the cathode (7), and separating out reduced metal cation in the form of a single simple substance while introducing direct-current power for electrolysis; and simultaneously carrying out water oxidation reaction at the anode (6) to acquire oxygen gas, and 5%-10% of hydrochloric acid solution can be acquired in the middle partition chamber (4), wherein one side of cation selective diaphragm (1) with phenolic group is the middle partition chamber (4), which is contacted with the diluted hydrochloric acid solution; and the other side of cation selective diaphragm (1) without phenolic group is the anode chamber (3), which is contacted with the diluted sulfuric acid solution.

4. The method according to claim 3, wherein the anode (6) is a lead alloy or titanium-base semiconductor coating electrode.

5. The method according to claim 3, wherein the current density of the anode (6) is 100A/m$^2$~500 A/m$^2$.

6. The method according to claim 3, wherein the acid metal chloride solution is a $NiCl_2$, $CuCl_2$, $CoCl_2$, or $ZnCl_2$ solution, with pH value ranging from 2 to 5.

7. The method according to claim 3, wherein the cathode (7) is a nickel sheet, a copper sheet, a cobalt sheet or a zinc sheet corresponding to metal cation in the cathode liquor.

8. The method according to claim 3, wherein the concentration of the diluted hydrochloric acid solution in the middle partition chamber (4) ranges from 0.5% to 1%.

**Patentansprüche**

1. Verfahren für die Herstellung eines kationenselektiven Diaphragmas (1), das **dadurch gekennzeichnet ist, dass** es die folgenden zwei Hauptschritte umfasst:

Schritt I: Herstellen eines Sulfon-enthaltenden Grunddiaphragmas durch die Mischung von Mangandioxid/Polyvinylidenftuorid:

a. Zugeben von Polyvinylidenfluorid und Styrol zu einem Ultraschalloszillator, der organisches Lösungsmittel enthält, das eine aktive Gruppe aufweist, wobei das die aktive Gruppe enthaltende organische Lösungsmittel eine Mischlösung aus 2-Acrylamid-2-methylpropansulfonsäure und Dimethylformamid im Gewichtsverhältnis von (8-9) : (1-2) oder eine Mischlösung aus 2-Acrylamid-2-methylpropansulfonsäure und Dimethylacetamid im Gewichtsverhältnis von (8-9) : (1-2) oder eine Mischlösung aus Natriumallylsulfonat und Dimethylformamid im Gewichtsverhältnis von (8-9) : (1-2), bevorzugt eine Mischlösung aus 2-Acrylamid-2-methylpropansulfonsäure und Dimethylformamid im Gewichtsverhältnis von 8 : 1 ist;
Zugeben von Nano-Mangandioxid während des Oszillierens;
nachdem das Mangandioxid vollständig gelöst ist, Zugeben der Mischung aus Hochdruck-Polyethylen und Glycidylacrylat oder Glycidylmethacrylat, gleichmäßiges Mischen und dann Zugeben eines Initiators;
wobei der Initiator eine Mischung aus Dilauroylperoxid und Di-tert-butylperoxid im Gewichtsverhältnis von 8 : 2 ist; verschiedene Stoffe, die in dem Schritt eingeschlossen sind, jeweils 8 Teile von Polyvinylidenfluorid, 2 Teile von Styrol, 0,1 Teile von Mangandioxid, 0,9 Teile von Hochdruck-Polyethylen, 2,5 Teile von Glycidylacrylat oder Glycidylmethacrylat, 85 Teile von einem eine aktive Gruppe enthaltenden organischen Lösungsmittel und 1,5 Teile an Initiator, bezogen auf das Gewicht, betragen;
gleichmäßiges Mischen der Lösung in Ultraschallumgebung, für 1-2 Tage Ruhenlassen und Herstellen der Filmgießflüssigkeit nach Entschäumen und Aushärten,
b. bei Normaltemperatur Gießen der Filmgießflüssigkeit auf eine Glasplatte, Erhitzen und Aushärten für 8 Stunden bei 120-150 °C in einem Thermostat und dann Abkühlen auf Raumtemperatur, um das Grunddiaphragma zu erhalten;

Schritt II. Plasma-bestrahltes Grunddiaphragma, das mit Phenolgruppe gepfropft wird:

a. nach isolierender Behandlung an einer Seite des Grunddiaphragmas, das im Schritt I erhalten wurde, Umsetzen von Oberflächenaktivierung auf dem Grunddiaphragma in einem Plasmareaktor, um die Oberflächenenergie und die Hydrophilie des Grunddiaphragmas zu erhöhen, wobei die gepulste Korona-Entladungsbestrahlung unter Normaldruck 20-100 s beträgt, wobei die Spannung 8-12 kV beträgt und das Arbeitsgas ein jedwedes oder jedwedes Mischgas von reinem Argon, reinem Stickstoff und reinem Helium ist;

b. Mischen eines Monomers, das Phenol enthält, und eines Vernetzungsmittels in Dimethylformamid oder Dimethylacetamid, um eine gleichförmige Lösung A zu erhalten, und Einweichen des aktivierten Grunddiaphragmas in der Lösung A für 30-200 min zur Polymerisationspfropfung;

c. nach Polymerisationspfropfung Durchführen von radikalischer Pfropfpolymerisation auf dem Grunddiaphragma im Plasmareaktor, wobei die gepulste Korona-Entladungsbestrahlung unter Normaldruck 20-100 s beträgt, wobei die Spannung 8-12 kV beträgt und das Arbeitsgas ein jedwedes oder jedwedes Mischgas von reinem Argon, reinem Stickstoff und reinem Helium ist; und

Einweichen in deionisiertem Wasser für 24 Stunden und Entfernen von unreagiertem Monomer.

2. Verfahren nach Anspruch 1, wobei im Schritt b von Schritt II das Monomer, das Phenol enthält, entweder 2-Allylphenol oder 4-Vinylphenol oder beides von diesen ist, das 5-20 % der Masseprozente der Lösung A beträgt, bevorzugt das 2-Allylphenol ist, das 15 % der Masseprozente der Lösung A beträgt; und das Vernetzungsmittel entweder Divinylbenzol oder Diisocyanat ist, das 0,5-1 % der Masseprozente der Lösung A, bevorzugt 0,8 % beträgt.

3. Herstellungsverfahren zur elektrolytischen Abscheidung und Raffination von Metallchlorid durch einen Membranprozess unter Verwendung eines kationenselektiven Diaphragmas (1), das durch das Verfahren nach einem der Ansprüche 1 und 2 erhältlich ist, und eines anionenselektiven Diaphragmas (2), um eine Elektrolysezelle (10) in eine Anodenkammer (3), eine mittlere Trennkammer (4) und eine Kathodenkammer (5) in der Reihefolge zu teilen, wobei eine Anode (6) und eine Kathode (7) sowie Anodenflüssigkeit (8) und Kathodenflüssigkeit (9) jeweils in der Anodenkammer (3) und der Kathodenkammer (5) angeordnet sind, die Anodenflüssigkeit (8) eine verdünnte Schwefelsäurelösung ist, die Kathodenflüssigkeit (9) eine saure Metallchloridlösung ist und eine verdünnte Salzsäurelösung in der mittleren Trennkammer (4) enthalten ist; Reduktion des Metallkations an der Kathode (7) und Abtrennung von reduziertem Metallkation in Form einer einzigen einfachen Substanz während der Zuführung von Gleichstromenergie für die Elektrolyse; und gleichzeitiger Durchführung einer Wasseroxidationsreaktion an der Anode (6) zur Gewinnung von Sauerstoffgas, und wobei 5 %-10 % an Salzsäurelösung in der mittleren Trennkammer (4) gewonnen werden können, wobei eine Seite des kationenselektiven Diaphragmas (1) mit Phenolgruppe die mittlere Trennkammer (4) ist, die mit der verdünnten Salzsäure Lösung verbunden ist; und die andere Seite des kationenselektiven Diaphragmas (1) ohne Phenolgruppe die Anodenkammer (3) ist, die mit der verdünnten Schwefelsäurelösung verbunden ist.

4. Verfahren nach Anspruch 3, wobei die Anode (6) eine Bleilegierung oder Titanbasierte Halbleiterbeschichtungselektrode ist.

5. Verfahren nach Anspruch 3, wobei die Stromdichte der Anode (6) 100 A/m$^2$~500 A/m$^2$ beträgt.

6. Verfahren nach Anspruch 3, wobei die saure Metallchloridlösung eine $NiCl_2$-, $CuCl_2$-, $CoCl_2$- oder $ZnCl_2$-Lösung mit einem pH-Wert im Bereich von 2 bis 5 ist.

7. Verfahren nach Anspruch 3, wobei die Kathode (7) eine Nickelplatte, eine Kupferplatte, eine Cobaltplatte oder eine Zinkplatte entsprechend dem Metallkation in der Kathodenflüssigkeit ist.

8. Verfahren nach Anspruch 3, wobei die Konzentration der verdünnten Salzsäurelösung in der mittleren Trennkammer (4) im Bereich von 0,5 % bis 1 % liegt.

**Revendications**

1. Procédé pour la préparation d'un diaphragme sélectif à l'égard des cations (1), qui est **caractérisé en ce qu'**il comprend les deux étapes principales suivantes consistant à :

étape 1 : préparer un diaphragme à base sulfonique par le mélange de dioxyde de manganèse et de fluorure de polyvinylidène :

a. ajouter du fluorure de polyvinylidène et du styrène à un oscillateur à ultrasons contenant un solvant organique ayant un groupe actif, dans lequel le solvant organique contenant un groupe actif est une solution mélangée d'acide 2-acrylamide-2-méthylpropanesulfonique et de diméthylformamide selon un rapport pondéral de (8 à 9)/(1 à 2), ou une solution mélangée d'acide 2-acrylamide-2-méthylpropanesulfonique et de diméthylacétamide selon un rapport pondéral de (8 à 9)/(1 à 2), ou une solution mélangée d'allylsulfonate de sodium et de diméthylformamide selon un rapport pondéral de (8 à 9)/(1 à 2), de préférence une solution mélangée d'acide 2-acrylamide-2-méthylpropanesulfonique et de diméthylformamide selon un rapport pondéral de 8/1 ; ajouter des nano-aiguilles de dioxyde de nanomanganèse tout en réalisant l'oscillation ; une fois le dioxyde de manganèse complètement dissous, ajouter le mélange de polyéthylène haute pression et d'acrylate de glycidyle ou de méthacrylate de glycidyle, mélanger de manière uniforme et puis ajouter un initiateur ;

dans lequel l'initiateur est un mélange de peroxyde de dilauroyle et de peroxyde de di-tert-butyle selon un rapport pondéral de 8/2 ; les différentes matières impliquées dans l'étape constituant respectivement 8 parts de fluorure de polyvinylidène, 2 parts de styrène, 0,1 part de dioxyde de manganèse, 0,9 part de polyéthylène haute pression, 2,5 parts d'acrylate de glycidyle ou de méthacrylate de glycidyle, 85 parts de solvant organique contenant un groupe actif et 1,5 parts d'initiateur en poids ;

mélanger de manière uniforme la solution sous environnement ultrasonique, laisser reposer pendant 1 à 2 jours, et préparer le liquide de coulée de film après traitement anti-mousse et durcissement,

b. à température normale, couler le liquide de coulée de film sur une plaque en verre, chauffer et durcir pendant 8 heures à une température allant de 120 à 150 °C dans un thermostat, et puis refroidir jusqu'à température ambiante pour obtenir le diaphragme de base ;

étape II. groupe phénolique greffé du diaphragme de base irradié par plasma :

a. après un traitement d'isolation sur un côté du diaphragme de base obtenu à partir de l'étape I, mettre en oeuvre l'activation de la surface sur le diaphragme de base dans un réacteur à plasma, pour stimuler l'énergie de surface et l'hydrophilie du diaphragme de base, dans lequel l'irradiation de décharge de couronne pulsée sous pression normale est de 20 à 100 s, dans lequel la tension est de 8 à 12 KV, et le gaz de travail est un gaz sélectionné parmi l'argon pur, l'azote pur et l'hélium pur ou tout mélange de ceux-ci ;

b. mélanger un monomère contenant du phénol et un agent de réticulation dans du diméthylformamide ou du diméthylacétamide pour obtenir une solution A uniforme, et tremper le diaphragme de base activé dans la solution A pendant 30 à 200 min pour la greffe de polymérisation ;

c. après la greffe de polymérisation, réaliser une polymérisation de greffe radicale sur le diaphragme de base dans le réacteur à plasma, dans lequel l'irradiation de décharge de couronne pulsée sous pression normale est de 20 à 100 s, dans lequel la tension est de 8 à 12 KV, et le gaz de travail est un gaz sélectionné parmi l'argon pur, l'azote pur et l'hélium pur ou tout mélange de ceux-ci ; et

tremper dans de l'eau déionisée pendant 24 heures, et enlever tout monomère n'ayant pas réagi.

**2.** Procédé selon la revendication 1, dans lequel dans l'étape b de l'étape II, le monomère contenant du phénol est soit du 2-allyphénol ou du 4-vinylphénol ou les deux, qui constitue de 5 à 20 % du pourcentage en masse de la solution A, de préférence le 2-allylphénol, qui constitue 15 % du pourcentage en masse de la solution A ; et l'agent de réticulation est soit du divinylbenzène ou du diisocyanate, qui constitue de 0,5 à 1 % du pourcentage en masse de la solution A, de préférence 0,8 %.

**3.** Procédé de production de dépôt électrolytique et de raffinage d'un chlorure de métal par un processus membranaire, en utilisant un diaphragme sélectif à l'égard des cations (1) pouvant être obtenu par le procédé de l'une quelconque des revendications 1 et 2, et un diaphragme sélectif à l'égard des anions (2) pour diviser une cellule électrolytique (10) en une chambre d'anode (3), une chambre de partition médiane (4) et une chambre de cathode (5) à la suite, dans lequel une anode (6) et une cathode (7), ainsi qu'une liqueur d'anode (8) et une liquide de cathode (9) sont respectivement agencées dans la chambre d'anode (3) et la chambre de cathode (5) ; la liqueur d'anode (8) est une solution diluée d'acide sulfurique, la liqueur de cathode (9) est une solution de chlorure de métal acide, et une solution diluée d'acide chlorhydrique est contenue dans la chambre de partition médiane (4) ; en réduisant le cation métallique au niveau de la cathode (7), et en séparant le cation métallique réduit sous la forme d'une seule substance simple tout en introduisant un courant continu pour l'électrolyse ; et en réalisant simultanément une réaction d'oxydation de l'eau au niveau de l'anode (6) pour capter le gaz oxygène, et de 5 % à 10% de la solution d'acide chlorhydrique peuvent être captés dans la chambre de partition médiane (4), dans lequel un côté du diaphragme sélectif à l'égard des cations (1) avec un groupe phénolique est la chambre de partition médiane (4), qui est amenée en contact avec la solution diluée d'acide chlorhydrique; et l'autre côté du diaphragme sélectif à l'égard des cations (1) sans groupe phénolique est la chambre d'anode (3), qui est amenée en contact avec la solution diluée d'acide sulfurique.

4. Procédé selon la revendication 3, dans lequel l'anode (6) est une électrode à revêtement semi-conducteur à base de titane ou d'alliage de plomb.

5. Procédé selon la revendication 3, dans lequel la densité du courant de l'anode (6) est de 100 A/m$^2$ à 500 A/m$^2$ environ.

6. Procédé selon la revendication 3, dans lequel la solution de chlorure de métal acide est une solution de NiCl$_2$, CuCl$_2$, CoCl$_2$ ou ZnCl$_2$, avec une valeur de pH allant de 2 à 5.

7. Procédé selon la revendication 3, dans lequel la cathode (7) est une feuille de nickel, une feuille de cuivre, une feuille de cobalt ou une feuille de zinc correspondant au cation métallique dans la liqueur de cathode.

8. Procédé selon la revendication 3, dans lequel la concentration de la solution diluée d'acide chlorhydrique dans la chambre de partition médiane (4) va de 0,5 % à 1 %.

**Fig. 1**

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102108519 A
- CN 2721628 Y
- CN 1548585 A
- WO 9306261 A1
- GB 1513553 A
- US 4104132 A
- GB 1460400 A